# EUROPEAN PATENT APPLICATION

(11) **EP 4 769 715 A1**
(43) Date of publication of application: **01.07.2026**
(21) Application number: 25867147.8
(22) Date of filing: 02.09.2025
(51) Int. Cl.: H01M 50/24, H01M 50/271, H01M 50/282, H01M 50/276, H01M 50/264, H01M 50/242

(54) **BATTERY MODULE AND BATTERY PACK COMPRISING SAME**

(30) Priority: 24.09.2024 KR 20240129252
(71) Applicant: LG Energy Solution, Ltd., Seoul 07335 (KR)
(72) Inventor: KIM, Kwang Mo, Daejeon 34122 (KR); JUNG, Hye Mi, Daejeon 34122 (KR)
(74) Representative: BCKIP Part mbB
(86) International application number: PCT/KR2025/013475
(87) International publication number: WO 2026/071528

(57) **Abstract**

A battery module according to some embodiments may include:
a module frame comprising first and second cell slots isolated in a first direction and a slot gap positioned between the first and second cell slots;
a first battery cell within the first cell slot; and
a second battery cell within the second cell slot.

Accordingly, some embodiments can prevent a thermal runaway event from occurring up to other adjacent battery cells even if a thermal runaway event occurs in some battery cells. Consequently, even if a thermal runaway event occurs in some battery cells, it is possible to prevent a thermal runaway event from occurring in the entire battery module or the entire battery pack.

## Description

### [Technical Field]

The present disclosure relates to a battery module and a battery pack including the same.

This application claims the benefit of priority to Korean Patent Application No. 10-2024-0129252, filed on September 24, 2024, and the entire contents of Korean Patent Application No. 10-2024-0129252 are hereby incorporated by reference.

### [Background]

Interest in secondary batteries capable of repeated long-term use through recharging is increasing to reduce dependence on fossil fuels and decrease carbon emissions. Accordingly, secondary batteries are used in various fields such as vehicles, portable electronic devices, and ESS (Energy Storage Systems).

In vehicles, a plurality of battery cells is used to ensure performance characteristics such as output and driving range. Typically, a plurality of battery cells forms a battery module, and a battery pack composed of a plurality of battery modules is mounted in the vehicle. In this configuration, the plurality of battery cells forming the battery module is positioned adjacent to each other. Therefore, if a thermal runaway event occurs in some battery cells, heat is easily transferred to adjacent battery. If this heat transfer occurs in a chain reaction, a thermal runaway event can occur throughout the entire battery module or battery pack, leading to a major explosion or fire.

Therefore, a technology is needed to prevent thermal runaway events from occurring throughout the entire battery module or battery pack, even if a thermal runaway event occurs in some battery cells.

### [Summary]

### [Technical Problem]

The technical problem addressed by the technical concept of the present disclosure is to prevent thermal runaway events from occurring in the entire battery module or the entire battery pack, even if thermal runaway events occur in some battery cells.

### [Technical Solution]

Some embodiments of the present disclosure that can solve the above problem are as follows.

A battery module according to some embodiments may include:
a module frame comprising first and second cell slots isolated in a first direction and a slot gap positioned between the first and second cell slots;
a first battery cell within the first cell slot; and
a second battery cell within the second cell slot.

In some embodiments, the module frame includes:
first to fourth partition walls spaced apart from each other in the first direction;
a first top cover part connecting the first and second partition walls;
a bottom bent part connecting the second and third partition walls; and
a second top cover part connecting the third and fourth partition walls, wherein
the first cell slot is defined by the first and second partition walls and the first top cover part,
the slot gap is defined by the second and third partition walls and the bottom bent part, and
the second cell slot is defined by the third and fourth partition walls and the second top cover part.

In some embodiments, the first and second top cover parts may overlap in the first direction.

In some embodiments, a width of the first top cover part in the first direction may be different from a width of the bottom bent part in the first direction.

In some embodiments, the width of the first top cover part in the first direction may be greater than the width of the bottom bent part in the first direction.

In some embodiments, the first and second partition walls and the first top cover part may further include one or more of an insulating coating layer, a thermal insulation coating layer, a heat-resistant coating layer, and a fire-resistant coating layer on a surface facing the first battery cell.

A battery module according to some embodiments may further include a pad within the slot gap.

A battery module according to some embodiments may further include one or more pads within the first cell slot.

A battery module according to some embodiments may further include first and second pads within the first cell slot, wherein the first battery cell may be positioned between the first and second pads.

A battery module according to some embodiments may further include a band surrounding the module frame.

In some embodiments, the band may surround an upper surface, both side surfaces, and a lower surface of the module frame.

In some embodiments, the band may surround the upper surface and both side surfaces of the module frame, or may surround the lower surface and both side surfaces of the module frame.

In some embodiments, the band may have a U-shape.

In some embodiments, the first top bent part may include a vent hole.

A battery pack according to some embodiments includes:
a base plate;
side walls; and
a battery module on the base plate, wherein
the battery module may include:
   a module frame comprising first and second cell slots isolated in a first direction and a slot gap positioned between the first and second cell slots;
   a first battery cell within the first cell slot; and
   a second battery cell within the second cell slot.

### [Advantageous Effects]

Some embodiments of the present disclosure include cell slots isolated from each other, so that a battery cell in one cell slot is isolated from a battery cell in another cell slot. Accordingly, even if a thermal runaway event occurs in some battery cells, it is possible to prevent a thermal runaway event from occurring up to other adjacent battery cells. Consequently, even if a thermal runaway event occurs in some battery cells, it is possible to prevent a thermal runaway event from occurring in the entire battery module or the entire battery pack.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view of a battery module according to some embodiments.
FIG. 2 is an exploded perspective view of a battery module according to some embodiments.
FIG. 3 is a partial perspective view of a module frame that can be included in a battery module according to some embodiments.
FIG. 4 is a cross-sectional view taken along line IV-IV' of FIG. 3.
FIG. 5 is a drawing showing a module frame that can be included in a battery module and a battery cell within a cell slot of the module frame according to some embodiments.
FIG. 6 is an exploded perspective view of a battery module according to some embodiments.
FIG. 7 is an exploded perspective view of a battery module according to some embodiments.
FIG. 8 is a perspective view of a battery module according to some embodiments.
FIG. 9 is a perspective view of a battery module according to some embodiments.
FIG. 10 is a perspective view of a battery module according to some embodiments.
FIG. 11 is a plan view of a battery pack according to some embodiments.

### [Best Mode for Carrying out the Disclosure]

The terms and words used herein shall not be interpreted as limited to their conventional or dictionary meanings, but shall be interpreted in a meaning consistent with the technical concept of the present disclosure, based on the Principe that the inventor may appropriately define the meaning of terms and words to describe his own invention in the best possible manner.

In this specification, terms such as "include" or "have" are intended to specify the presence of the features, numbers, steps, operations, components, parts, or combinations thereof described herein, and should not be understood as precluding the presence or possibility of adding one or more other features, numbers, steps, operations, components, parts, or combinations thereof. Furthermore, when a layer, film, region, plate, or similar part is described as being "on" another part, this includes not only being "directly above" the other part but also cases where another part exists between them. Conversely, when a layer, film, region, plate, or similar part is described as being "under" another part, this includes not only being "directly below" the other part but also cases where another part exists between them.

The embodiments and drawings are merely examples of the present disclosure and do not represent all the technical ideas of the present disclosure; therefore, it should be understood that various equivalents and modifications may exist that can replace them.

In describing the present disclosure, detailed explanations of known configurations or functions are omitted where such descriptions are deemed to obscure the essence of the present disclosure.

The drawings are provided to more fully explain the present disclosure to those skilled in the art. Therefore, the shapes, sizes, and numbers of components in the drawings may be exaggerated, omitted, or shown schematically for clearer explanation. The shapes, sizes, proportions, and numbers of components in the drawings do not necessarily fully reflect the actual shapes, sizes, proportions, and numbers of the components.

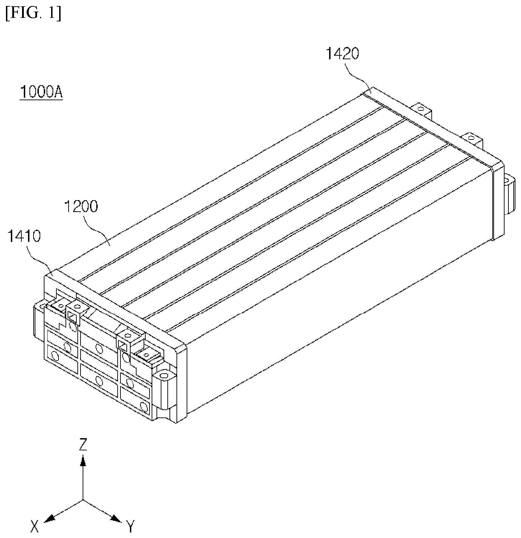

For convenience of description, this disclosure uses a three-dimensional Cartesian coordinate system to describe the positions of components, the shapes of components, and the relationships between components. The X-axis, Y-axis, and Z-axis are shown in FIGS. 1 through 11. In this specification, "X direction" means a direction parallel to the X-axis. In this specification, "+X direction" means the same direction as the arrow direction of the X-axis shown in FIGS. 1 to 11. In this specification, "-X direction" means the opposite direction to the arrow direction of the X-axis shown in FIGS. 1 to 11. In this specification, "Y direction" means a direction parallel to the Y-axis. In this specification, "+Y direction" means the same direction as the arrow direction of the Y-axis shown in FIGS. 1 to 11. In this specification, "-Y direction" means the opposite direction to the arrow direction of the Y-axis shown in FIGS. 1 to 11. In this specification, "Z direction" means a direction parallel to the Z-axis. In this specification, "+Z direction" means the same direction as the arrow direction of the Z-axis shown in FIGS. 1 to 11. In this specification, "-Z direction" means the opposite direction to the arrow direction of the Z-axis shown in FIGS. 1 to 11.

Hereinafter, embodiments of the present disclosure will be described in detail with reference to the drawings.

### (First embodiment)

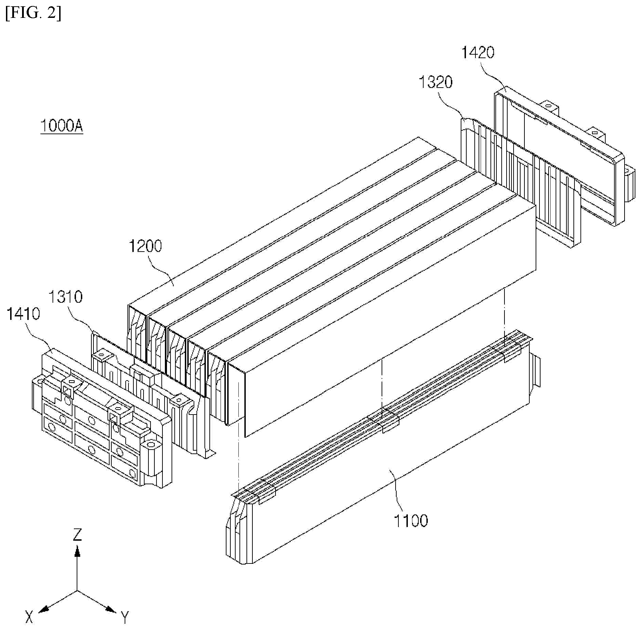

FIG. 1 is a perspective view of a battery module according to some embodiments. FIG. 2 is an exploded perspective view of a battery module according to some embodiments.

Referring to FIGS. 1 and 2, the battery module 1000A may include a plurality of battery cells 1100, a module frame 1200, a first busbar assembly 1310, a second busbar assembly 1320, a first end plate assembly 1410, and a second end plate assembly 1420.

Each of the plurality of battery cells 1100 may be a lithium secondary battery. Each of the plurality of battery cells 1100 may include an electrode assembly, an electrolyte, and a cell case.

The electrode assembly may include a positive electrode, a negative electrode, and a separator. The positive electrode may include a positive electrode active material layer, a positive electrode current collector, and a positive electrode tab. The negative electrode may include a negative electrode active material layer, a negative electrode current collector, and a negative electrode tab. The electrode assembly may be of a jelly-roll type or a stack-type. The jelly-roll type may have a structure in which the positive electrode, negative electrode, and separator are wound. The stack-type may have a structure in which a first electrode unit including a first positive electrode, a first negative electrode, and a first separator and a second electrode unit including a second positive electrode, a second negative electrode, and a second separator are stacked with a third separator interposed therebetween. The electrolyte may be of a liquid type or a gel type.

The cell case may be cylindrical, prismatic, or pouch-type. When the cell case is cylindrical or prismatic, the positive electrode tab and the negative electrode tab may be welded to the cell case. When the cell case is pouch-type, each of the plurality of battery cells 1100 may include a positive electrode lead and a negative electrode lead. The positive electrode lead may be electrically connected to one or more positive electrode tabs, and the negative electrode lead may be electrically connected to one or more negative electrode tabs. The positive electrode lead and the negative electrode lead may protrude from one side of the pouch-type cell case. The positive electrode lead and the negative electrode lead may protrude in the same direction or may protrude in opposite directions.

Hereinafter, only embodiments in which the cell case is pouch-type and the positive electrode lead and the negative electrode lead protrude in opposite directions will be described. Those skilled in the art to which the present disclosure belongs will be able to easily reach embodiments in which the cell case is cylindrical or prismatic and embodiments in which the cell case is pouch-type and the positive electrode lead and the negative electrode lead protrude in the same direction based on the present disclosure.

The plurality of battery cells 1100 may be arranged in the Y direction. Some of the plurality of battery cells 1100 may be connected in parallel. The number of battery cells 1100 connected in parallel may be determined according to the magnitude of the current to be output through the battery module 1000A. A group composed of battery cells 1100 connected in parallel may be referred to as a bank. The plurality of battery cells 1100 may constitute a plurality of banks. The plurality of banks may be connected in series with each other. The number of banks connected in series may be determined according to the magnitude of the voltage to be output through the battery module 1000A.

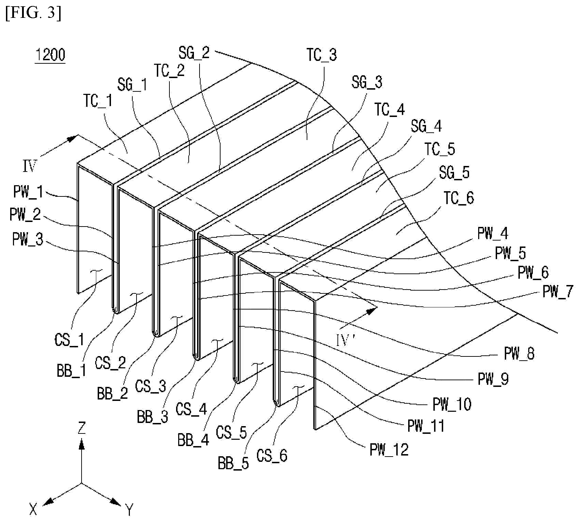

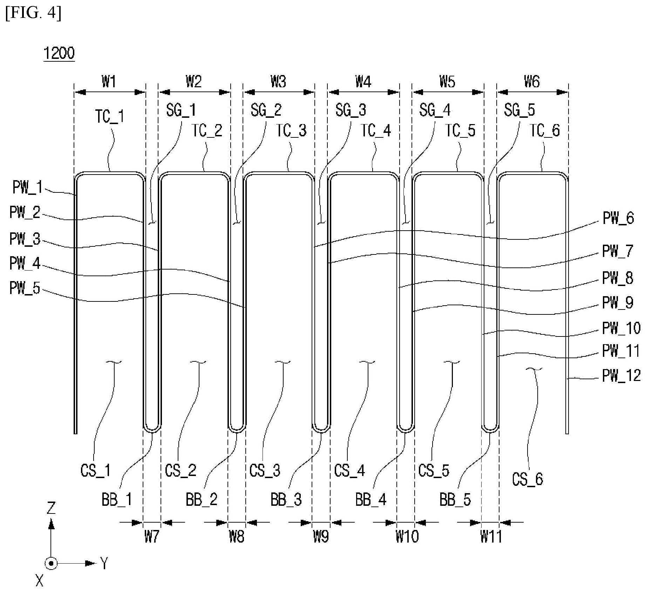

FIG. 3 is a partial perspective view of a module frame that can be included in a battery module according to some embodiments. FIG. 4 is a cross-sectional view taken along line IV-IV' of FIG. 3.

Referring to FIGS. 3 and 4, the module frame 1200 may include a plurality of cell slots CS_1, CS_2, CS_3, CS_4, CS_5, CS_6 and a plurality of slot gaps SG_1, SG_2, SG_3, SG_4, SG_5.

In the present disclosure, the first cell slot and the second cell slot may refer to two adjacent cell slots among the plurality of cell slots CS_1, CS_2, CS_3, CS_4, CS_5, CS_6 included in the module frame 1200. In the present disclosure, the first and second partition walls may refer to partition walls defining the first cell slot. In the present disclosure, the third and fourth partition walls may refer to partition walls defining the second cell slot. In the present disclosure, the first top cover part may refer to a top cover part defining the first cell slot. In the present disclosure, the second top cover part may refer to a top cover part defining the second cell slot. In the present disclosure, the second and third partition walls may refer to partition walls defining a slot gap positioned between the first cell slot and the second cell slot.

Each of the plurality of cell slots CS_1, CS_2, CS_3, CS_4, CS_5, CS_6 may contain one or more battery cells 1100. The plurality of cell slots CS_1, CS_2, CS_3, CS_4, CS_5, CS_6 may be isolated from each other in the Y direction. The battery cell 1100 in the cell slot CS_1, the battery cell 1100 in the cell slot CS_2, the battery cell 1100 in the cell slot CS_3, the battery cell 1100 in the cell slot CS_4, the battery cell 1100 in the cell slot CS_5, and the battery cell 1100 in the cell slot CS_6 may be isolated from each other in the Y direction.

The plurality of slot gaps SG_1, SG_2, SG_3, SG_4, SG_5 may be isolated from each other in the Y direction.

The slot gap SG_1 may be positioned between the cell slot CS_1 and the cell slot CS_2. The slot gap SG_2 may be positioned between the cell slot CS_2 and the cell slot CS_3. The slot gap SG_3 may be positioned between the cell slot CS_3 and the cell slot CS_4. The slot gap SG_4 may be positioned between the cell slot CS_4 and the cell slot CS_5. The slot gap SG_5 may be positioned between the cell slot CS_5 and the cell slot CS_6.

The slot gap SG_1 may isolate the cell slot CS_1 and the cell slot CS_2 in the Y direction. The slot gap SG_2 may isolate the cell slot CS_2 and the cell slot CS_3 in the Y direction. The slot gap SG_3 may isolate the cell slot CS_3 and the cell slot CS_4 in the Y direction. The slot gap SG_4 may isolate the cell slot CS_4 and the cell slot CS_5 in the Y direction. The slot gap SG_5 may isolate the cell slot CS_5 and the cell slot CS_6 in the Y direction.

The slot gap SG_1 may isolate the battery cell 1100 in the cell slot CS_1 and the battery cell 1100 in the cell slot CS_2 in the Y direction. The slot gap SG_2 may isolate the battery cell 1100 in the cell slot CS_2 and the battery cell 1100 in the cell slot CS_3 in the Y direction. The slot gap SG_3 may isolate the battery cell 1100 in the cell slot CS_3 and the battery cell 1100 in the cell slot CS_4 in the Y direction. The slot gap SG_4 may isolate the battery cell 1100 in the cell slot CS_4 and the battery cell 1100 in the cell slot CS_5 in the Y direction. The slot gap SG_5 may isolate the battery cell 1100 in the cell slot CS_5 and the battery cell 1100 in the cell slot CS_6 in the Y direction.

Accordingly, even if a thermal runaway event occurs in the battery cell 1100 in one cell slot, it is possible to prevent a thermal runaway event from occurring in the battery cell 1100 in another cell slot. For example, even if a thermal runaway event occurs in the battery cell 1100 in the cell slot CS_3, it is possible to prevent a thermal runaway event from occurring in the battery cells 1100 in the remaining cell slots CS_1, CS_2, CS_4, CS_5, CS_6. Consequently, even if a thermal runaway event occurs in some battery cells 1100, it is possible to prevent a thermal runaway event from occurring in the entire battery module 1000A or the entire battery pack.

The module frame 1200 may include a plurality of partition walls PW_1, PW_2, PW_3, PW_4, PW_5, PW_6, PW_7, PW_8, PW_9, PW_10, PW_11, PW_12, a plurality of top covers TC_1, TC_2, TC_3, TC_4, TC_5, TC_6, and a plurality of bottom bent parts BB_1, BB_2, BB_3, BB_4, BB_5. The module frame 1200 may have a corrugated structure.

The plurality of partition walls PW_1, PW_2, PW_3, PW_4, PW_5, PW_6, PW_7, PW_8, PW_9, PW_10, PW_11, PW_12 may be spaced apart from each other in the Y direction. The partition wall PW _1 and the partition wall PW_2 may be spaced apart in the Y direction with the top cover TC_1 interposed therebetween. The partition wall PW_2 and the partition wall PW_3 may be spaced apart in the Y direction with the bottom bent part BB_1 interposed therebetween. The partition wall PW_3 and the partition wall PW_4 may be spaced apart in the Y direction with the top cover TC_2 interposed therebetween. The partition wall PW_4 and the partition wall PW_5 may be spaced apart in the Y direction with the bottom bent part BB_2 interposed therebetween. The partition wall PW_5 and the partition wall PW_6 may be spaced apart in the Y direction with the top cover TC_3 interposed therebetween. The partition wall PW_6 and the partition wall PW_7 may be spaced apart in the Y direction with the bottom bent part BB_3 interposed therebetween. The partition wall PW_7 and the partition wall PW_8 may be spaced apart in the Y direction with the top cover TC_4 interposed therebetween. The partition wall PW_8 and the partition wall PW_9 may be spaced apart in the Y direction with the bottom bent part BB_4 interposed therebetween. The partition wall PW_9 and the partition wall PW_10 may be spaced apart in the Y direction with the top cover TC_5 interposed therebetween. The partition wall PW_10 and the partition wall PW_11 may be spaced apart in the Y direction with the bottom bent part BB_5 interposed therebetween. The partition wall PW_11 and the partition wall PW_12 may be spaced apart in the Y direction with the top cover TC_6 interposed therebetween.

The plurality of partition walls PW_1, PW_2, PW_3, PW_4, PW_5, PW_6, PW_7, PW_8, PW_9, PW_10, PW_11, PW_12 may be substantially perpendicular to the Y direction.

The plurality of top covers TC_1, TC_2, TC_3, TC_4, TC_5, TC_6 may be spaced apart from each other in the Y direction. The top cover TC_1 and the top cover TC_2 may be spaced apart in the Y direction with the partition wall PW_2, the bottom bent part BB_1, and the partition wall PW_3 interposed therebetween. The top cover TC_2 and the top cover TC_3 may be spaced apart in the Y direction with the partition wall PW_4, the bottom bent part BB_2, and the partition wall PW_5 interposed therebetween. The top cover TC_3 and the top cover TC_4 may be spaced apart in the Y direction with the partition wall PW_6, the bottom bent part BB_3, and the partition wall PW_7 interposed therebetween. The top cover TC_4 and the top cover TC_5 may be spaced apart in the Y direction with the partition wall PW_8, the bottom bent part BB_4, and the partition wall PW_9 interposed therebetween. The top cover TC_5 and the top cover TC_6 may be spaced apart in the Y direction with the partition wall PW_10, the bottom bent part BB_5, and the partition wall PW_11 interposed therebetween.

The top cover TC_1 may connect the partition wall PW_1 and the partition wall PW_2. The top cover TC_2 may connect the partition wall PW_3 and the partition wall PW_4. The top cover TC_3 may connect the partition wall PW_5 and the partition wall PW_6. The top cover TC_4 may connect the partition wall PW_7 and the partition wall PW_8. The top cover TC_5 may connect the partition wall PW_9 and the partition wall PW_10. The top cover TC_6 may connect the partition wall PW_11 and the partition wall PW_12.

The plurality of top covers TC_1, TC_2, TC_3, TC_4, TC_5, TC_6 may overlap each other in the Y direction. The plurality of top covers TC_1, TC_2, TC_3, TC_4, TC_5, TC_6 may be positioned in the +Z direction relative to the plurality of partition walls PW_1, PW_2, PW_3, PW_4, PW_5, PW_6, PW_7, PW_8, PW_9, PW_10, PW_11, PW_12. The plurality of top covers TC_1, TC_2, TC_3, TC_4, TC_5, TC_6 may be positioned in the +Z direction relative to the plurality of bottom bent parts BB_1, BB_2, BB_3, BB_4, BB_5.

The plurality of bottom bent parts BB_1, BB_2, BB_3, BB_4, BB_5 may be spaced apart from each other in the Y direction. The bottom bent part BB_1 and the bottom bent part BB_2 may be spaced apart in the Y direction with the partition wall PW_3, the top cover TC_2, and the partition wall PW_4 interposed therebetween. The bottom bent part BB_2 and the bottom bent part BB_3 may be spaced apart in the Y direction with the partition wall PW_5, the top cover TC_3, and the partition wall PW_6 interposed therebetween. The bottom bent part BB_3 and the bottom bent part BB_4 may be spaced apart in the Y direction with the partition wall PW_7, the top cover TC_4, and the partition wall PW_8 interposed therebetween. The bottom bent part BB_4 and the bottom bent part BB_5 may be spaced apart in the Y direction with the partition wall PW_9, the top cover TC_5, and the partition wall PW_10 interposed therebetween.

The bottom bent part BB_1 may connect the partition wall PW_2 and the partition wall PW_3. The bottom bent part BB_2 may connect the partition wall PW_4 and the partition wall PW_5. The bottom bent part BB_3 may connect the partition wall PW_6 and the partition wall PW_7. The bottom bent part BB_4 may connect the partition wall PW_8 and the partition wall PW_9. The bottom bent part BB_5 may connect the partition wall PW_10 and the partition wall PW_11.

The plurality of bottom bent parts BB_1, BB_2, BB_3, BB_4, BB_5 may overlap each other in the Y direction. The plurality of bottom bent parts BB_1, BB_2, BB_3, BB_4, BB_5 may be positioned in the -Z direction relative to the plurality of partition walls PW_1, PW_2, PW_3, PW_4, PW_5, PW_6, PW_7, PW_8, PW_9, PW_10, PW_11, PW_12.

The top cover TC_1 and the bottom bent part BB_1 may be spaced apart in the Z direction with the partition wall PW_2 interposed therebetween. The bottom bent part BB_1 and the top cover TC_2 may be spaced apart in the Z direction with the partition wall PW_3 interposed therebetween. The top cover TC_2 and the bottom bent part BB_2 may be spaced apart in the Z direction with the partition wall PW_4 interposed therebetween. The bottom bent part BB_2 and the top cover TC_3 may be spaced apart in the Z direction with the partition wall PW_5 interposed therebetween. The top cover TC_3 and the bottom bent part BB_3 may be spaced apart in the Z direction with the partition wall PW_6 interposed therebetween. The bottom bent part BB_3 and the top cover TC_4 may be spaced apart in the Z direction with the partition wall PW_7 interposed therebetween. The top cover TC_4 and the bottom bent part BB_4 may be spaced apart in the Z direction with the partition wall PW_8 interposed therebetween. The bottom bent part BB_4 and the top cover TC_5 may be spaced apart in the Z direction with the partition wall PW_9 interposed therebetween. The top cover TC_5 and the bottom bent part BB_5 may be spaced apart in the Z direction with the partition wall PW_10 interposed therebetween. The bottom bent part BB_5 and the top cover TC_6 may be spaced apart in the Z direction with the partition wall PW_11 interposed therebetween.

The cell slot CS_1 may be defined by the partition wall PW_1, the top cover TC_1, and the partition wall PW_2. The cell slot CS_1 may be open in the +X direction, -X direction, and -Z direction. The slot gap SG_1 may be defined by the partition wall PW_2, the bottom bent part BB_1, and the partition wall PW_3. The slot gap SG_1 may be open in the +X direction, -X direction, and +Z direction. The cell slot CS_2 may be defined by the partition wall PW_3, the top cover TC_2, and the partition wall PW_4. The cell slot CS_2 may be open in the +X direction, -X direction, and -Z direction. The slot gap SG_2 may be defined by the partition wall PW_4, the bottom bent part BB_2, and the partition wall PW_5. The slot gap SG_2 may be open in the +X direction, -X direction, and +Z direction. The cell slot CS_3 may be defined by the partition wall PW_5, the top cover TC_3, and the partition wall PW_6. The cell slot CS_3 may be open in the +X direction, -X direction, and -Z direction. The slot gap SG_3 may be defined by the partition wall PW_6, the bottom bent part BB_3, and the partition wall PW_7. The slot gap SG_3 may be open in the +X direction, -X direction, and +Z direction. The cell slot CS_4 may be defined by the partition wall PW_7, the top cover TC_4, and the partition wall PW_8. The cell slot CS_4 may be open in the +X direction, -X direction, and -Z direction. The slot gap SG_4 may be defined by the partition wall PW_8, the bottom bent part BB_4, and the partition wall PW_9. The slot gap SG_4 may be open in the +X direction, -X direction, and +Z direction. The cell slot CS_5 may be defined by the partition wall PW_9, the top cover TC_5, and the partition wall PW_10. The cell slot CS_5 may be open in the +X direction, -X direction, and -Z direction. The slot gap SG_5 may be defined by the partition wall PW_10, the bottom bent part BB_5, and the partition wall PW_11. The slot gap SG_5 may be open in the +X direction, -X direction, and +Z direction. The cell slot CS_6 may be defined by the partition wall PW_11, the top cover TC_6, and the partition wall PW _12. The cell slot CS_6 may be open in the +X direction, -X direction, and -Z direction.

The widths W1, W2, W3, W4, W5, W6 in the Y direction of each of the plurality of top covers TC_1, TC_2, TC_3, TC_4, TC_5, TC_6 may be different from the widths W7, W8, W9, W10, W11 in the Y direction of each of the plurality of bottom bent parts BB_1, BB_2, BB_3, BB_4, BB_5. The widths W1, W2, W3, W4, W5, W6 in the Y direction of each of the plurality of top covers TC_1, TC_2, TC_3, TC_4, TC_5, TC_6 may be greater than the widths W7, W8, W9, W10, W11 in the Y direction of each of the plurality of bottom bent parts BB_1, BB_2, BB_3, BB_4, BB_5. The widths W1, W2, W3, W4, W5, W6 in the Y direction of each of the plurality of top covers TC_1, TC_2, TC_3, TC_4, TC_5, TC_6 may be substantially the same as each other. The widths W7, W8, W9, W10, W11 in the Y direction of each of the plurality of bottom bent parts BB_1, BB_2, BB_3, BB_4, BB_5 may be substantially the same as each other.

The first busbar assembly 1310 may include a first busbar frame and a first busbar coupled to the first busbar frame. The second busbar assembly 1320 may include a second busbar frame and a second busbar coupled to the second busbar frame. The first busbar and the second busbar may be electrically connected to the positive electrode lead or the negative electrode lead of each of the plurality of battery cells 1100. The first busbar frame and the second busbar frame may include an insulating material. The first busbar assembly 1310 and the second busbar assembly 1320 may be spaced apart in the X direction with the plurality of battery cells 1100 and the module frame 1200 interposed therebetween.

The first end plate 1410 may be coupled to the module frame 1200. The first end plate 1410 may cover the first busbar assembly 1310. The second end plate 1420 may be coupled to the module frame 1200. The second end plate 1420 may cover the second busbar assembly 1320. The first end plate 1410 and the second end plate 1420 may be spaced apart in the X direction with the first busbar assembly 1310, the plurality of battery cells 1100, the module frame 1200, and the second busbar assembly 1320 interposed therebetween.

### (Second embodiment)

The second embodiment is substantially the same as the first embodiment except that a coating layer CL is added, so the description of parts substantially the same as the first embodiment will be omitted.

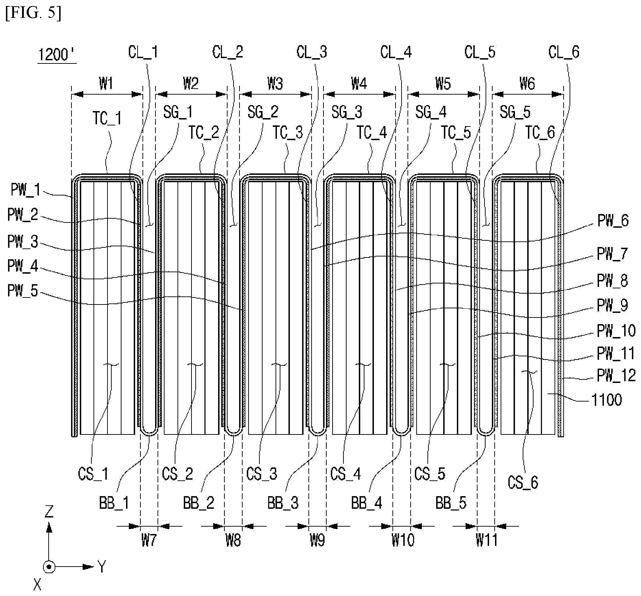

FIG. 5 is a view showing a module frame that can be included in a battery module and a battery cell within a cell slot of the module frame according to some embodiments.

Referring to FIG. 5, in some embodiments, the module frame 1200' may include a plurality of coating layers CL_1, CL_2, CL_3, CL_4, CL_5, CL_6.

Each of the plurality of coating layers CL_1, CL_2, CL_3, CL_4, CL_5, CL_6 may be one or more, two or more, three or more, or four of an insulating coating layer, a thermal insulation coating layer, a heat-resistant coating layer, and a fire-resistant coating layer. Each of the plurality of coating layers CL_1, CL_2, CL_3, CL_4, CL_5, CL_6 may include ceramic, silicone, or mica.

The partition wall PW_1, the top cover TC_1, and the partition wall PW_2 may include a coating layer CL_1 on a surface facing the battery cell 1100. The partition wall PW_3, the top cover TC_2, and the partition wall PW_4 may include a coating layer CL_2 on a surface facing the battery cell 1100. The partition wall PW_5, the top cover TC_3, and the partition wall PW_6 may include a coating layer CL_3 on a surface facing the battery cell 1100. The partition wall PW_7, the top cover TC_4, and the partition wall PW_8 may include a coating layer CL_4 on a surface facing the battery cell 1100. The partition wall PW_9, the top cover TC_5, and the partition wall PW_10 may include a coating layer CL_5 on a surface facing the battery cell 1100. The partition wall PW_11, the top cover TC_6, and the partition wall PW_12 may include a coating layer CL_6 on a surface facing the battery cell 1100.

### (Third embodiment)

The third embodiment is substantially the same as the first embodiment except that a pad 1500 is added, so the description of parts substantially the same as the first embodiment will be omitted.

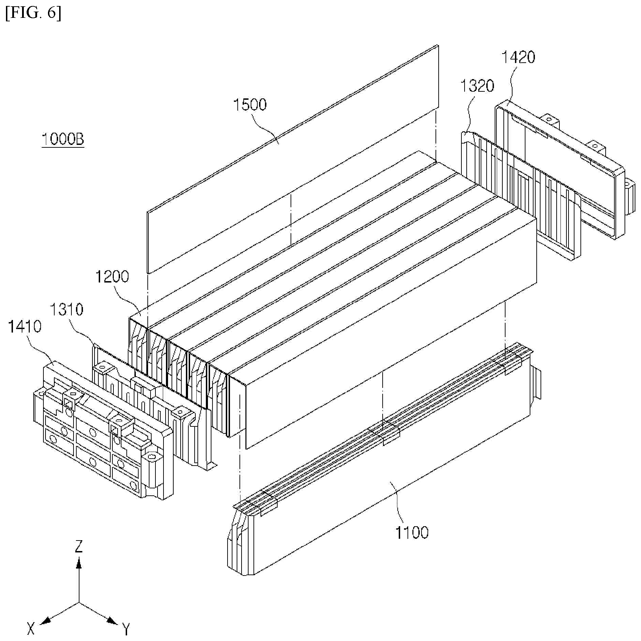

FIG. 6 is an exploded perspective view of a battery module according to some embodiments.

Referring to FIG. 6, the battery module 1000B may include a pad 1500. The pad 1500 may be within one or more of the plurality of slot gaps SG_1, SG_2, SG_3, SG_4, SG_5. The pad 1500 may absorb swelling of the plurality of battery cells 1100. The pad 1500 may include an elastic material. As a non-limiting example, the pad 1500 may include polyurethane. The pad 1500 may delay or block heat transfer between the plurality of battery cells 1100. The pad 1500 may include a flame-retardant material. As a non-limiting example, the pad 1500 may include ceramic, silicone, or mica.

### (Fourth embodiment)

The fourth embodiment is substantially the same as the third embodiment except for the position of the pad 1500, so the description of parts substantially the same as the third embodiment will be omitted.

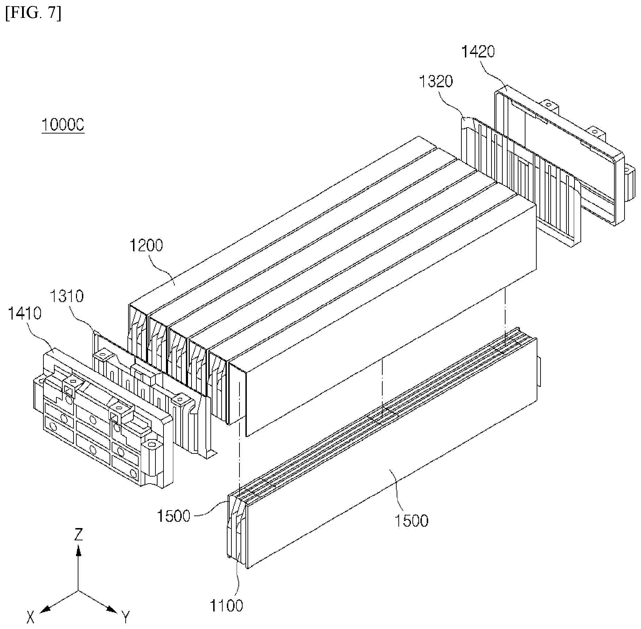

FIG. 7 is an exploded perspective view of a battery module according to some embodiments.

Referring to FIG. 7, the battery module 1000C may include one or more pads 1500. The one or more pads 1500 may be within one or more of the plurality of cell slots CS_1, CS_2, CS_3, CS_4, CS_5, CS_6. When there is one pad 1500 within one of the plurality of cell slots CS_1, CS_2, CS_3, CS_4, CS_5, CS_6, the one pad 1500 may be in the +Y direction or -Y direction with respect to the battery cell 1100 within the cell slot. When there are two pads 1500 within one of the plurality of cell slots CS_1, CS_2, CS_3, CS_4, CS_5, CS_6, the battery cell 1100 within the cell slot may be positioned between the two pads 1500. The two pads 1500 may be spaced apart in the Y direction with the battery cell 1100 interposed therebetween.

### (Fifth embodiment)

The fifth embodiment is substantially the same as the first embodiment except that a band 1600 is added, so the description of parts substantially the same as the first embodiment will be omitted.

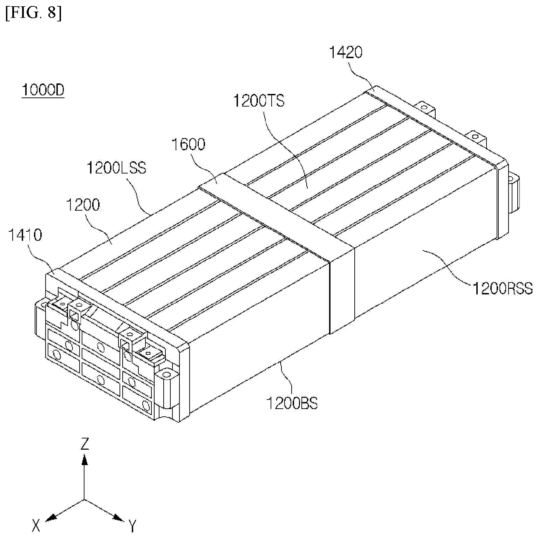

FIG. 8 is a perspective view of a battery module according to some embodiments.

Referring to FIG. 8, the battery module 1000D may include a band 1600. The band 1600 may fix the module frame 1200. The band 1600 may prevent the module frame 1200 from opening in the +Y direction or -Y direction. The band 1600 may fix the plurality of battery cells 1100 within the plurality of cell slots CS_1, CS_2, CS_3, CS_4, CS_5, CS_6. The band 1600 may prevent the plurality of battery cells 1100 from escaping in the -Z direction.

The band 1600 may surround the module frame 1200. The band may surround the upper surface 1200TS, both side surfaces 1200LSS, 1200RSS, and the lower surface 1200BS of the module frame 1200. The ZY plane shape of the band 1600 may be rectangular. The number of bands 1600 may be one or more. The number of bands 1600 may be determined in consideration of the size of the module frame 1200 and the number of battery cells 1100.

### (Sixth embodiment)

The sixth embodiment is substantially the same as the fifth embodiment except for the shape of the band 1600', so the description of parts substantially the same as the fifth embodiment will be omitted.

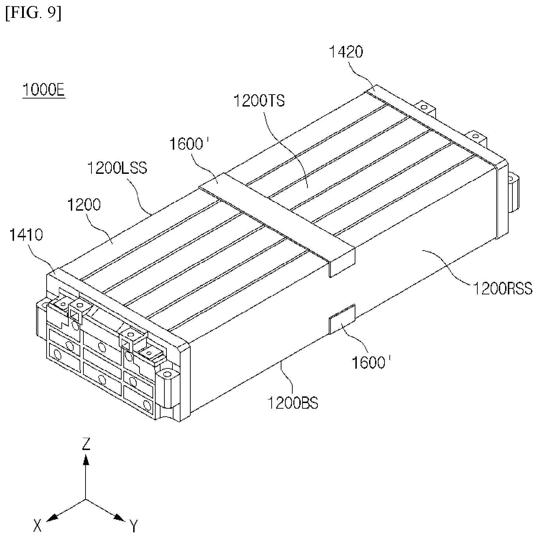

FIG. 9 is a perspective view of a battery module according to some embodiments.

Referring to FIG. 9, the battery module 1000E may include a band 1600'. The band 1600' may surround the module frame 1200. The band 1600' may surround the upper surface 1200TS and both side surfaces 1200LSS, 1200RSS of the module frame 1200. The band 1600' may surround the lower surface 1200BS and both side surfaces 1200LSS, 1200RSS of the module frame 1200. The band 1600' may have a U-shape. The ZY plane shape of the fixing member 1600' may be U.

### (Seventh embodiment)

The seventh embodiment is substantially the same as the fifth embodiment except that a plurality of vent holes VH are added, so the description of parts substantially the same as the fifth embodiment will be omitted.

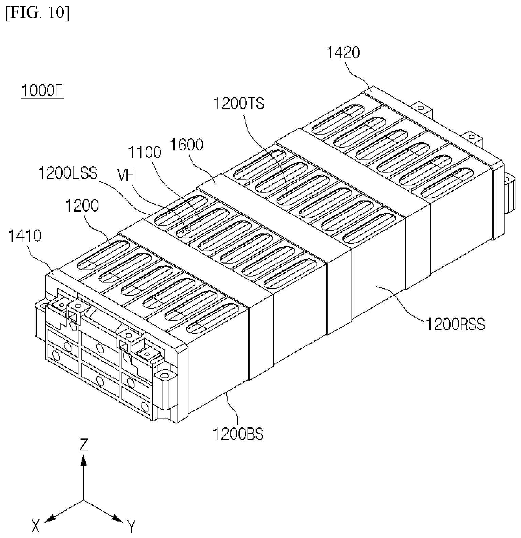

FIG. 10 is a perspective view of a battery module according to some embodiments.

Referring to FIG. 10, the battery module 1000F may include a plurality of bands 1600, and each of the plurality of top covers TC_1, TC_2, TC_3, TC_4, TC_5, TC_6 may include a plurality of vent holes VH. When a thermal runaway event occurs in the battery cell 1100 in each of the plurality of cell slots CS_1, CS_2, CS_3, CS_4, CS_5, CS_6, heat, gas, and flames may be discharged to the outside of the battery module 1000F through the plurality of vent holes VH. The plurality of bands 1600 and the plurality of vent holes VH may not overlap each other in the Z direction.

### (Eighth embodiment)

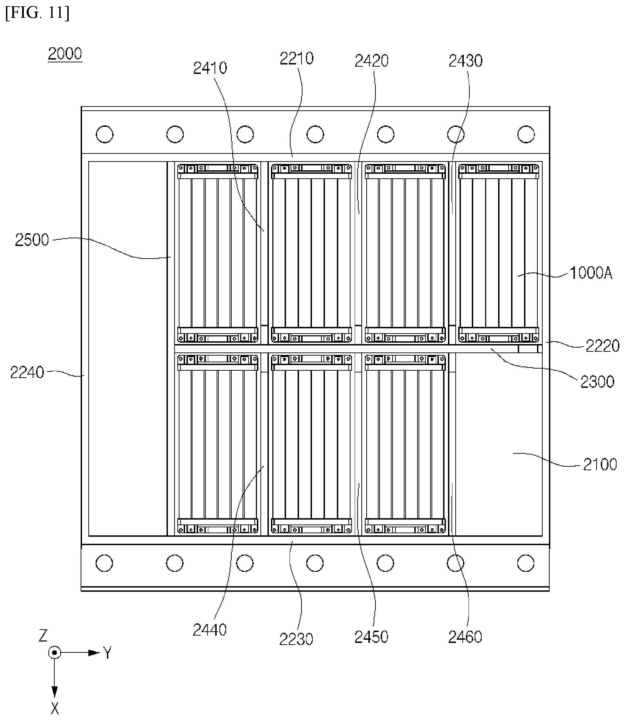

FIG. 11 is a drawing showing a battery pack according to some embodiments.

Referring to FIG. 11, the battery pack 10000 may include a base plate 2100, side walls 2210, 2220, 2230, 2240, a center beam 2300, cross beams 2410, 2420, 2430, 2440, 2450, 2460, an electrical component partition wall 2500, and a plurality of battery modules 1000A. The battery pack 2000 may be the final form of a battery system mounted on a vehicle or the like.

The base plate 2100 may be under the plurality of battery modules 1000A. The base plate 2100 may support the plurality of battery modules 1000A.

The side walls 2210, 2220, 2230, 2240 may be positioned around the perimeter of the base plate 2100. The side walls 2210, 2220, 2230, 2240 may surround the plurality of battery modules 1000A.

The center beam 2300 may isolate the plurality of battery modules 1000A from each other. The center beam 2300 may be positioned between the plurality of battery modules 1000A. The center beam 2300 may be substantially parallel to the Y direction. The center beam 2300 may extend in the Y direction between the electrical component partition wall 2500 and the side wall 2220.

Each of the cross beams 2310, 2320, 2330, 2340, 2350, 2360 may isolate the plurality of battery modules 1000A from each other. Each of the cross beams 2310, 2320, 2330, 2340, 2350, 2360 may be positioned between the plurality of battery modules 1000A. Each of the cross beams 2310, 2320, 2330, 2340, 2350, 2360 may be substantially parallel to the X direction. The cross beams 2310, 2320, 2330 may extend in the X direction between the partition wall 2210 and the center beam 2220. The cross beams 2340, 2350, 2360 may extend in the X direction between the partition wall 2230 and the center beam 2220.

The electrical component partition wall 2500 may isolate electrical components from the plurality of battery modules 1000A. The electrical component partition wall 2500 may be positioned between the electrical components and the plurality of battery modules 1000A. The electrical component partition wall 2500 may be substantially parallel to the X direction. The electrical component partition wall 2500 may extend in the X direction between the opposing side walls 2210, 2230.

The plurality of battery modules 1000A may be as described above.

The foregoing description is merely illustrative of the present disclosure. The scope of the present disclosure should be interpreted by the claims, and all technical ideas within the scope of the claims or within the scope of equivalents should be interpreted as falling within the scope of the present disclosure.

### [Description of Reference Numerals]

1000: BATTERY MODULE
1100: BATTERY CELL
1200: MODULE FRAME
1310, 1320: BUSBAR ASSEMBLY
1410, 1420: END PLATE ASSEMBLY
1500: PAD
1600: BAND
PW: PARTITION WALL
TC: TOP COVER
BB: BOTTOM BENT PART
CS: CELL SLOT
SG: SLOT GAP
CL: COATING LAYER
VH: VENT HOLE
2000: BATTERY PACK
2100: BASE PLATE
2210, 2220, 2230, 2240: SIDE WALL
2300: CENTER BEAM
2410, 2420, 2430, 2440, 2450, 2460: CROSS BEAM
2500: ELECTRICAL COMPONENT PARTITION WALL

## Claims

1. A battery module comprising:
a module frame comprising first and second cell slots isolated in a first direction and a slot gap positioned between the first and second cell slots;
a first battery cell within the first cell slot; and
a second battery cell within the second cell slot.

2. The battery module of claim 1, wherein
the module frame comprises:
first to fourth partition walls spaced apart from each other in the first direction;
a first top cover part connecting the first and second partition walls;
a bottom bent part connecting the second and third partition walls; and
a second top cover part connecting the third and fourth partition walls, wherein
the first cell slot is defined by the first and second partition walls and the first top cover part,
the slot gap is defined by the second and third partition walls and the bottom bent part, and
the second cell slot is defined by the third and fourth partition walls and the second top cover part.

3. The battery module of claim 2, wherein
the first and second top cover parts overlap in the first direction.

4. The battery module of claim 2, wherein
a width of the first top cover part in the first direction is different from a width of the bottom bent part in the first direction.

5. The battery module according to claim 2, wherein
the width of the first top cover part in the first direction is greater than the width of the bottom bent part in the first direction.

6. The battery module of claim 2, wherein
the first and second partition walls and the first top cover part further comprise one or more of an insulating coating layer, a thermal insulation coating layer, a heat-resistant coating layer, and a fire-resistant coating layer on a surface facing the first battery cell.

7. The battery module of claim 1, further comprising:
a pad within the slot gap.

8. The battery module of claim 1, further comprising:
one or more pads within the first cell slot.

9. The battery module of claim 8, further comprising
first and second pads within the first cell slot, wherein
the first battery cell is positioned between the first and second pads.

10. The battery module of claim 1, further comprising:
a band surrounding the module frame.

11. The battery module of claim 10, wherein
the band surrounds an upper surface, both side surfaces, and a lower surface of the module frame.

12. The battery module of claim 10, wherein
the band surrounds the upper surface and both side surfaces of the module frame, or surrounds the lower surface and both side surfaces of the module frame.

13. The battery module of claim 10, wherein
the band has a U-shape.

14. The battery module of claim 2, wherein
the first top bent part comprises a vent hole.

15. A battery pack comprising:
a base plate;
side walls; and
a battery module on the base plate, wherein
the battery module comprises:
a module frame comprising first and second cell slots isolated in a first direction and a slot gap positioned between the first and second cell slots;
a first battery cell within the first cell slot; and
a second battery cell within the second cell slot.
